# EUROPEAN PATENT SPECIFICATION

(11) **EP 3 840 292 B1**
(45) Date of publication and mention of the grant of the patent: **21.08.2024**
(21) Application number: 19383148.4
(22) Date of filing: 19.12.2019
(51) Int. Cl.: H04N 21/2347, H04N 21/466

(54) **CONTINUOUS DETERMINATION OF QUALITY OF EXPERIENCE IN ENCRYPTED VIDEO TRAFFIC USING SEMI-SUPERVISED LEARNING WITH GENERATIVE ADVERSARIAL NETWORKS**
KONTINUIERLICHE BESTIMMUNG DER ERFAHRUNGSQUALITÄT IM VERSCHLÜSSELTEN VIDEOVERKEHR UNTER VERWENDUNG VON HALBÜBERWACHTEM LERNEN MIT GENERATIVEN GEGNERISCHEN NETZWERKEN
DÉTERMINATION CONTINUE DE LA QUALITÉ D'EXPÉRIENCE DANS UN TRAFIC VIDÉO CHIFFRÉ AU MOYEN DE L'APPRENTISSAGE SEMI-SUPERVISÉ AVEC DES RÉSEAUX CONTRADICTOIRES GÉNÉRATIFS

(43) Date of publication of application: 23.06.2021
(73) Proprietor: Zhilabs S.L., 08029 Barcelona (ES)
(72) Inventor: Arpirez Vega, Julio, Madrid (ES); Zapater Cano, Sergi, Barcelona (ES); Raventós Simón, Joan, Barcelona (ES); Garcia Campderrich, Sergio, Barcelona (ES)
(74) Representative: Grünecker Patent- und Rechtsanwälte PartG mbB

(56) References cited:
- EP-A1- 3 439 308
- US-A1- 2018 336 471
- FATIMA HUSSAIN ET AL: "Machine Learning for Resource Management in Cellular and IoT Networks: Potentials, Current Solutions, and Open Challenges", ARXIV.ORG, CORNELL UNIVERSITY LIBRARY, 201 OLIN LIBRARY CORNELL UNIVERSITY ITHACA, NY 14853, 21 July 2019 (2019-07-21), XP081445617
- HOANG DUY TRINH ET AL: "Classification of Mobile Services and Apps through Physical Channel Fingerprinting: a Deep Learning Approach", ARXIV.ORG, CORNELL UNIVERSITY LIBRARY, 201 OLIN LIBRARY CORNELL UNIVERSITY ITHACA, NY 14853, 25 October 2019 (2019-10-25), XP081520959

## Description

### Technical Field

The present disclosure relates to techniques for automatically and continuously determining quality of experience in encrypted video traffic. In particular, the present disclosure relates to using a Generative Adversarial (GAN) Network to classify features of encrypted video traffic according to quality of experience.

### Background

Video is without doubt one of the top applications on both mobile and fixed networks, with end users accessing video content through content delivery technologies such as adaptive video streaming and over-the-top (OTT) video applications. Network providers may monitor network traffic in order to spot usage patterns, problems in delivery and where to improve the network, but this does not necessarily provide any information about how end-users are experiencing the network.

Video quality of experience provides a measure of how an end-user accessing video content is experiencing the network from a quality perspective. However, obtaining an accurate measure of QoE can be difficult. Feedback from an end user is subjective because each user's perception of video quality will not be the same. More objectively, video quality of experience may be ascertained in terms of QoE parameters measured at a user device, such as quality (low definition, standard definition, medium definition, high definition and ultra-high definition), resolution (width and height), rebuffering time, number of stalls and time to stream start. However, the extraction of such information directly from user devices is often difficult to implement and impacts on the processing power and bandwidth available to the user devices.

In addition, the video quality of experience is often linked to network performance - distortion is introduced during the preparation of the content and the delivery through the network until the content reaches the user device. However, the information obtained directly from user devices may not be easily linked to network conditions and almost all video streams are end-to-end encrypted for reasons of network security and user privacy, meaning that direct access to the video bitstream to estimate video quality is not possible.

It is therefore desirable to provide a system and method for determining quality of experience that overcomes the above disadvantages of the prior art.

EP 3 439 308 A1 discloses a method and respective system for determining quality of experience parameters of an encrypted video stream received at a client device. The method comprises extracting, from one or more encrypted video streams sent over a network from a content server to a plurality of client devices, at least one stream-related feature. At least one quality-related label is determined based at least in part on applying a trained classifier to the at least one stream-related feature, wherein quality-related labels correspond to quality of experience parameters of an encrypted video stream received at a client device.

Fatima Hussain et al, "Machine Learning for Resource Management in Cellular and loT Neworks: Potentials, Current Solutions, and Open Challenges", ARXIV.ORG, 21 July 2019, conduct a systematic and in-depth survey of the maschine learning- and deep learning-based resource management mechanisms in cellular wireless and loT networks.

US 2018/336471 A1 discloses a method and system for performing semi-supervised regression with a generative adversarial network (GAN) that includes a generator comprising a first neural network and a discriminator comprising a second neural network, comprising: outputting, from the first neural network, generated samples derived from a random noise vector; inputting, to the second neural network, the generated samples, a plurality of labelled training samples, and a plurality of unlabelled training samples; and outputting, from the second neural network, a predicted continuous label for each of a plurality of the generated samples and unlabelled samples.

Hoang Duy Trinh et al, "Classification of Mobile Services and Apps through Physical Channel Fingerprinting: a Deep Learning Approach", ARXIV.ORG, 25 October 2019, proposes and validates algorithms to perform automatic classification of applications and services, at runtime, from the raw physical channel of an operative mobile network, without having to decode and/or decrypt the transmitted flows. A Convolutional Neural Network (CNN) classifier is augmented with the capability of rejecting sessions whose patterns do not conform to those learned during the training phase, and is subsequently utilized to attain a fine grained decomposition of the traffic for the four monitored radio cells, in an online and unsupervised fashion.

### Summary

It is the object of the present invention to provide an improved system and method for determining quality of experience in encrypted video traffic. This object is solved by the subject matter of the independent claims. Embodiments are defined by the dependent claims.

The present disclosure provides for a system and method for determining parameters of Quality of Experience (QoE) in encrypted video traffic by means of a Generative Adversarial Network (GAN) trained using semi-supervised machine learning. The labeled dataset used for training the machine learning models is enhanced with an unlabeled dataset obtained automatically from the network. The unlabeled dataset, which is orders of magnitude larger than the labeled one, enables the accuracy of determination of the QoE parameters to increase. These parameters include, among others, video resolution, video quality, video stalls and video rebuffering. The goal is to ascertain video QoE delivered to the end users of the network in a continuous and automatic manner so that the system and method are able to automatically adapt to changes in the encrypted video traffic.

In an embodiment, a computer-implemented method of classifying features of an encrypted video stream to determine video quality of experience (QoE) comprises: extracting, from one or more encrypted video streams sent from a content server to at least one user device, at least one stream-related feature; inputting the at least one stream-related feature into a discriminator neural network of a generative adversarial neural network (GAN) wherein the discriminator neural network is trained to classify the at least one stream-related feature using semi-supervised learning based on labeled data and first unlabeled data, and wherein the discriminator neural network is periodically re-trained using the labeled data and second unlabeled data based at least in part on meeting a predetermined condition; and classifying, by the discriminator neural network, the at least one stream-related feature into at least one class of a plurality of classes, wherein each of the plurality of classes correspond to a QoE parameter.

According to an aspect, the labeled data comprises stream-related features extracted from the one or more encrypted video streams and labeled with corresponding QoE parameters extracted from the at least one user device. The unlabeled data comprises stream-related features extracted from the one or more encrypted video streams and stream-related features generated by a generator neural network of the GAN. The semi-supervised learning comprises supervised training of the discriminator neural network based on the labeled set of data and adversarial training of the discriminator neural network based on the unlabeled data.

In a further embodiment, a computer-implemented method for training a discriminator neural network of a GAN to classify stream-related features of an encrypted video stream, comprises: training a discriminator neural network of a generative adversarial neural network (GAN) using a supervised learning technique based on labeled data, wherein the labeled data comprises stream-related features extracted from the one or more encrypted video streams and labeled with corresponding QoE parameters extracted from the at least one user device; training the discriminator neural network using an adversarial training technique based on first unlabeled data, wherein unlabeled data comprises stream-related features extracted from the one or more encrypted video streams and stream-related features generated by the generator neural network; and repeating the preceding steps, using the labeled data and second unlabeled data, based at least in part on meeting a predetermined condition.

According to an aspect, meeting the predetermined condition comprises at least one of: a predetermined period of time having passed since the discriminator neural network was trained, a value of at least one QoE parameter falls below or exceeds a threshold value, and a user input is received.

According to a further aspect, the QoE parameters comprise one or more of video quality parameters, video resolution parameters, a rebuffering time, a rebuffering time percentage, a number of stalls, an average stall duration, a time to stream start, and a streaming reproduction cut-off ratio, and the stream-related features comprise at least one of a volume timeline, a mean throughput, an effective throughput, a quartile of throughput, a video state estimate, a video duration, a total number of high, mid and/or low bitrate peaks, a high, mid and/or low peak density, and a total number of the one or more encrypted video streams.

In an embodiment, a system for determining quality of experience (QoE) parameters of an encrypted video stream received at a user device, comprises: at least one user device configured to receive, from a content server, over a network, one or more encrypted video streams; and a GAN comprising a discriminator neural network and a generator neural network. The discriminator neural network is trained to classify at least one stream-related feature extracted from the one or more encrypted video streams into at least one class of a plurality of classes, using semi-supervised learning based on labeled data and first unlabeled data, wherein each of the plurality of classes correspond to a QoE parameter, and wherein the discriminator neural network is configured to be periodically re-trained using the labeled data and second unlabeled data based at least in part on meeting a predetermined condition.

According to an aspect, the system further comprises a feature extraction module configured to automatically extract stream-related features from the one or more encrypted video streams whenever the predetermined condition is met.

According to another aspect, the labeled data comprises stream-related features extracted from the one or more encrypted video streams and labeled with corresponding QoE parameters extracted from the at least one user device, and the unlabeled data comprises stream-related features extracted from the one or more encrypted video streams and stream-related features generated by a generator neural network of the GAN.

According to an aspect, the semi-supervised learning comprises supervised training of the discriminator neural network based on the labeled set of data and adversarial training of the discriminator neural network based on the unlabeled data.

According to a further aspect, meeting the predetermined condition comprises at least one of: a predetermined period of time having passed since the discriminator neural network was trained, a value of at least one QoE parameter falls below or exceeds a threshold value, and a user input is received.

According to another aspect, the network is a fixed or a mobile network. According to yet another aspect, the network is a converged network.

### Description of the Figures

The accompanying drawings are incorporated into and form a part of the specification for the purpose of explaining the principles of the embodiments. The drawings are not to be construed as limiting the embodiments to only the illustrated and described embodiments of how they can be made and used. Further features and advantages will become apparent from the following and more particularly from the description of the embodiments, as illustrated in the accompanying drawings, wherein:
**FIG. 1** illustrates a block diagram of a system for determining quality of experience (QoE) parameters of an encrypted video stream received at a user device in accordance with an embodiment.
**FIG. 2** illustrates a block diagram of the system when training the discriminator neural network to determine the QoE parameters of the encrypted video stream received at the user device in accordance with an embodiment.
**FIG. 3** illustrates a process flow diagram for operation of the system for determining QoE parameters of an encrypted video stream received at a user device in accordance with an embodiment.
**FIG. 4** illustrates a process flow diagram for a method of training a discriminator neural network of a GAN to classify features of an encrypted video stream in accordance with an embodiment.
**FIG. 5** illustrates a process flow diagram for a method of classifying features of an encrypted video stream to determine QoE parameters in accordance with an embodiment.

### Detailed Description

Described herein are systems and methods for determining parameters of Quality of Experience (QoE) in encrypted video traffic in a semi-supervised manner by means of a Generative Adversarial Network (GAN). For purposes of explanation, numerous examples and specific details are set forth in order to provide a thorough understanding of the described embodiments. Embodiments as defined by the claims may include some or all of the features in these examples alone or in combination with other features described below.

The illustrative embodiments will be described with reference to the drawings wherein like elements and structures are indicated by like reference numbers. Further, where an embodiment is a method, steps and elements of the method may be combinable in parallel or sequential execution. As far as they are not contradictory, all embodiments described below can be combined with each other.

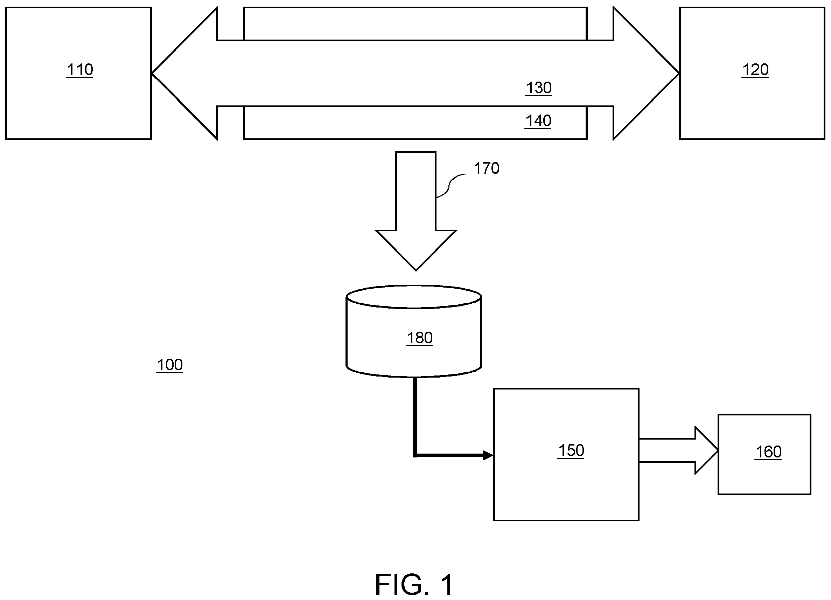

FIG. 1 illustrates a block diagram of a system 100 for determining quality of experience (QoE) parameters 160 of an encrypted video stream 130 received at a user device 110, in accordance with an embodiment. The system 100 comprises one or more user devices 110, a content or media server 120, a network 140, the end-to-end encrypted video stream 130, and a discriminator neural network 150 that has been trained in order to be used as a classifier.

The content or media server 120 hosts and serves video content accessed by end users through their respective user devices 110. In the context of the present disclosure, user devices 110 may also be referred to as user equipment (UE). The user devices 110 are configured to access video content provided by the content server 120 over the network 140. The owner of the content or media server 120 may or may not be the same as the owner (operator) of the network 140. In an embodiment, the network 140 may be a fixed network, for example FTTH, HFC, DSL or any other suitable fixed network. In another embodiment, the network 140 may be a mobile network, for example 3G, 4G, 5G, WiFi or any other suitable mobile network. Network 140 may simultaneously include any suitable combination of 3G, 4G, 5G and fixed networks. In yet another embodiment, the network 140 is any general IP network. In some embodiments, network 140 comprises networks with capacity to carry a combination of data, voice and video traffic. Network 140 may comprise converged networks which include a composite of the previous access.

The video content is provided to the user devices 110 by means of the end-to-end encrypted video stream 130. In other words, the end-to-end encrypted video stream 130 is the network traffic used to deliver the video content from the content or media server 120 to the user equipment 110. In practice, the video stream 130 comprises one or more encrypted video streams. For example, video stream 130 may comprise a collection of packet streams which can run on a variety of transports, all of them encrypted.

It should be noted that although the present disclosure refers to user devices 110 accessing video content, the system and methods disclosed herein are not limited to video content as such, but can be applied to any combination of video, voice and/or data traffic that may be received by user equipment 110.

The discriminator neural network 150, once trained, is configured to receive stream-related features 170 extracted from the encrypted video stream 130. Stream-related features 170 are a set of traffic characteristics extracted from the end-to-end encrypted video stream 130. In an embodiment, stream-related features may be automatically extracted from the one or more encrypted video streams 130 by a feature extraction module (not illustrated). For example, in some embodiments, the feature extraction module may be a passive tap into the network 140. In other embodiments, stream-related features may be extracted from a mirror of the encrypted video stream 130 via underlying switches. Specifically, the stream-related features are extracted via the analysis of the mirrored encrypted video stream.

In an embodiment, stream-related features are traffic-related characteristics inferred directly from the network traffic without any need for decrypting the encrypted video stream. In other words, stream-related features are chosen that do not require direct access to the bitstream. This means that stream-related features may be extracted without compromising network security or user privacy, and, further, without the need to install additional equipment in the network.

The stream-related features may be extracted continuously or periodically to allow for continuous monitoring of the network 140 and video traffic 130. Alternatively, the stream-related features 170 may be extracted in response to a trigger, such as an input from the owner of the network 130 or content server 120.

In an embodiment, stream-related features include at least one of a volume timeline, a mean throughput, an effective throughput, different quartiles of the throughput (such as a qt75 throughput, a qt25 throughput, and/or a median throughput), a video state estimate (transient, steady, silence, shortbuff), a video duration, a total number of high, mid and/or low bitrate peaks (peaks that cross given thresholds), a high, mid and/or low peak density, and a total number of the one or more encrypted video streams. The stream-related features may be represented as feature vectors. In addition, the stream related features may include information received from the network 140, such as information associated with the signaling plane. For example, the stream related features may include a device type of the user device receiving the encrypted video stream.

As discussed above, the encrypted video stream 130 is, in practice, not a single video stream, but comprises multiple encrypted video streams. Each of the multiple encrypted video streams may be monitored individually. Multiple encrypted video streams may correspond to the same video content. Accordingly, the stream-related features may be extracted for the overall video content (i.e. all encrypted video streams corresponding to the same video content), the different video states (for example, throughput during the transient state, throughput during the steady state, throughput during the silence state, throughput during the shortbuff state, duration of the transient state, duration of the steady state, and so on for each of the stream-related features), and for the one or more encrypted video streams that compose the video content.

In some embodiments, the extracted stream-related features 170 are stored as unlabeled dataset 180. The unlabeled dataset 180 is then input into the discriminator neural network 150. In other embodiments, the extracted stream-related features 170 may be directly input into the discriminator neural network 150. The discriminator neural network 150 is then configured to classify the stream-related features 170 into at least one of a plurality of classes 160, where each of the plurality of classes corresponds to a video QoE parameter. The QoE parameters 160 obtained by running the extracted features 170 through the discriminator are labels that represent the quality of experience that end-users have when processing the respective encrypted video stream in their user device. From these labels QoE parameters such as video resolution, video quality, video stalls and video rebuffering can be directly or indirectly obtained.

In an embodiment, QoE parameters include at least one of quality (low definition, standard definition, medium definition, high definition and ultra-high definition), resolution (256x144, 426x240, 1280x720, 1920x1080, etc.) and rebuffering time, rebuffering time percentage, number of stalls, average stall duration, and time to stream start in time units and streaming reproduction cut-off ratio.

Accordingly, for every stream-related feature 170 input into the discriminator 150 at least one QoE parameter is obtained. The quality of experience of an end user viewing content at a user device 110 receiving an encrypted video stream 130 is therefore ascertained without the need to obtain data directly from the user device 110 and without the need to decrypt the video stream 130 or the need for knowledge of the content server 120.

In this manner, information about quality of experience (i.e. the obtained QoE parameters) may be provided continuously or periodically to the owner (operator) of the network and/or the owner (operator) of the content server. This allows for monitoring of the network and/or server to maintain quality of experience at user devices. In addition, the QoE parameters obtained before and after a change in the network and/or content server allow the impact of the change on the quality of experience for users to be assessed. For example, in sites where many users are experiencing low QoE, the network operator may perform capacity expansions or other optimization efforts. If many users of a certain device are experiencing low QoE, the problem may reside in the device, for example by means of an OS update of the device which can be fixed subsequently. If many users of a given application are experiencing low QoE, the problem might reside in that application, and the network operator can contact the application vendor to fix the issue. In some cases, application vendors will place caches in the operator network to improve QoE and the systems and methods disclosed herein can help validate that this is the case.

System 100 illustrates a single discriminator neural network 150 configured to classify the stream related features 170 extracted from the video stream 130. However, in some embodiments, system 100 may include a plurality of parallel discriminator neural networks, each of the plurality of discriminator neural networks trained to classify stream-related features according to a respective group of one or more QoE parameters. In other embodiments, system 100 may include a plurality of parallel discriminator neural networks, each of the plurality of discriminator neural networks configured to receive stream-related features for different types of video content or transports.

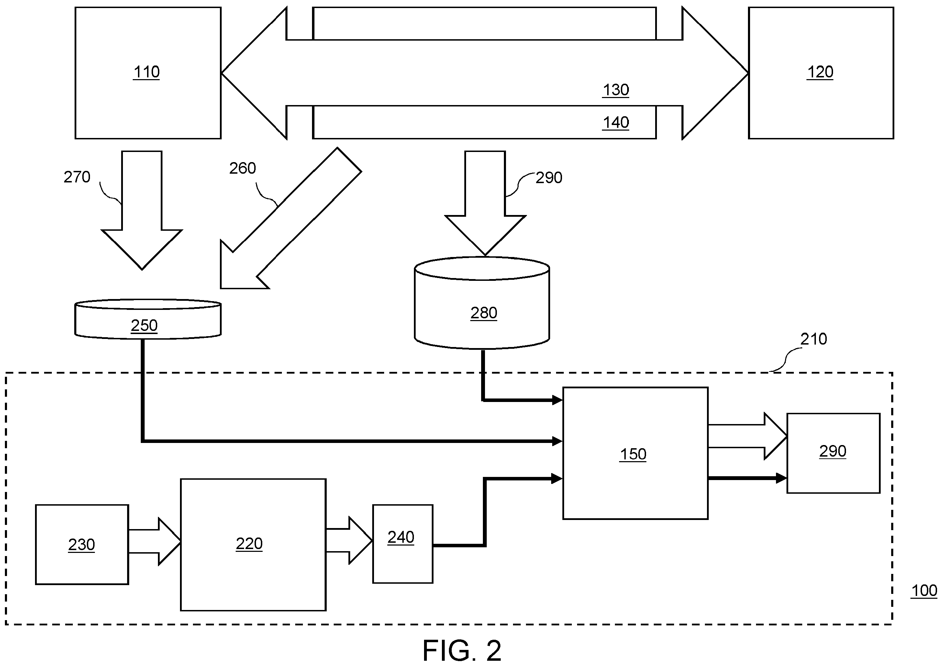

**FIG. 2** illustrates a block diagram of system 100 configured to train the discriminator neural network 150 to classify stream-related features 170 extracted from the encrypted video stream 130 as discussed in relation to **FIG. 1** above.

As illustrated in **FIG. 2****,** the discriminator neural network 150 is a component of a generative adversarial network (GAN) 210. The GAN 210 comprises a generator neural network 220 coupled to the discriminator neural network 150. Depending on the set of QoE parameters that are being determined, the generator neural network 220 and the discriminator neural network 150 may be Convolutional Neural Networks (CNNs), Long Short-Term memory neural networks (LSTMs) or any other suitable neural networks. For example, in an embodiment, the generator 220 is a CNN with three convolutional layers, dimensionality of latent space 50, 64 filters in the first layer and a series of transposed convolutions with leaky ReLU activations between the layers and the discriminator 150 is also a CNN with four convolution layers and one fully-connected layer. Other suitable combinations with a bidirectional LSTM in the generator 220 and a CNN in the discriminator 150 are also possible.

The generator neural network 220 is configured to process an input comprising a noise distribution 230 to generate stream-related features 240. The input is sampled from an arbitrary noise distribution such as a uniform distribution. The stream-related features 240 generated by the generator neural network 220 may also be referred to as "fake" stream-related features.

During training, the discriminator neural network 150 is configured to receive three inputs: the stream-related features 240 generated by the generator neural network 220, a labeled dataset 250, and an unlabeled dataset 280.

The labeled dataset 250 comprises a first set of stream-related features 260 extracted from the encrypted video stream 130 and a set of QoE parameters 270. The QoE parameters 270 are ground truth labels corresponding to features directly measured at the one or more user devices 110. The labeled dataset 250 is formed by joining the ground truth labels (QoE parameters) 270 with their related network features 260. In other words, each of the stream-related features of the first set of stream-related features 260 is labeled with a corresponding QoE parameter, where the QoE parameters 270 are obtained from the one or more user devices 110. The ground truth labels 270 are used for training and testing. The first set of stream-related features are used for training, testing and validation.

In an embodiment, the QoE parameters 270 may be automatically extracted from the one or more user devices 110. Here, the one or more user devices 110 from which the QoE parameters 270 are extracted may be one or more of controlled user equipments, UEs, and UE simulators. Accordingly, the features directly measured at the user devices 110 to obtain the QoE parameters 270 may be directly (and automatically) output in the appropriate format as labeled vectors of features. This improves efficiency by eliminating the need to process raw data into valid (correctly-formatted) labels for input into the discriminator neural network 150.

The unlabeled dataset 280 comprises a second set of stream-related features 290 extracted from the encrypted video stream 130. There are no labels for the first set of stream-related features. In an embodiment, the first set of stream-related features 260 and the second set of stream-related features 290 are unrelated to each other, meaning that the encrypted video stream from which the first set of stream-related features 260 is extracted does not correspond to the encrypted video stream from which the second set of stream-related features 290 is extracted.

The labeled dataset 250 may be obtained by automated means, but still requires specific actions to be performed on the user devices 110. Thus, the size of the labeled dataset 250 will be limited. The unlabeled dataset 280, however, may be potentially obtained from all the continuous traffic (the encrypted video stream 130) in the network 140. Thus, the unlabeled dataset 280 is orders of magnitude larger than the labeled dataset 290. In an embodiment, the second set of stream-related features 290 of the unlabeled dataset 280 are automatically extracted from the encrypted video stream 130. For example, the feature extraction module may continuously and automatically analyze the encrypted video stream 130 and extract unlabeled stream-related features, which are then used to augment the labeled dataset 250. This allows for continuous training of the discriminator neural network 150, as will be discussed in more detail below. Furthermore, the accuracy of the classification performed by the discriminator neural network 150 is increased significantly based on the quantity of instances in the unlabeled dataset 280.

The discriminator neural network 150 is trained using a semi-supervised machine learning technique. In semi-supervised learning, a neural network is trained using both labeled data and unlabeled data. The semi-supervised learning technique comprises two training stages: an adversarial training stage and a supervised training stage.

During the adversarial training stage, GAN 210 is trained using the standard two-player adversarial game. The discriminator neural network 150 is trained adversarially with the generator neural network 220. During adversarial training, the generator 220 and the discriminator 150 are trained simultaneously, but with opposing objectives. The discriminator's 150 training objective is to recognize whether the unlabeled stream-related features that it receives are "real" features 290 extracted from the video stream 130 or "fake" features 240 generated by the generator neural network 220. The generator neural network's 220 training objective is "fool" the discriminator neural network 150 by generating stream-related features 240 that the discriminator neural network 150 thinks are "real" stream-related features 290 from unlabeled data 280. The learnable parameters of the discriminator 150 are updated according to whether the discriminator correctly predicted that the input stream-related features are real or fake. The learnable parameters of the generator 220 are updated according to whether the generator 220 succeeded in fooling the discriminator 150. The competition between the generator neural network 220, whose goal is to generate features 240 that are indistinguishable from features 290 extracted from the video stream 130 and the discriminator neural network 150, whose goal is to discriminate between real and generated features, results in the optimization of both neural networks.

Thus, during the adversarial training stage, the discriminator neural network 150 is configured to output a prediction as to whether the input received by the discriminator neural network 150 is real data (i.e. data from the unlabeled dataset 240) or fake data (i.e. data 240 generated by the generator neural network 220).

In supervised machine learning, a supervised machine learning algorithm analyzes training data consisting of training examples to produce an inferred function. Each training example is a pair consisting of an input and a corresponding known output, where the input is generally referred to as a feature and the corresponding output is generally referred to as a label. In the case where the output is discrete, the inferred function is referred to as a classifier. For any valid input (feature), a classifier should be able to predict the correct output (label). Thus, during the supervised learning stage, the discriminator neural network 150 receives the labeled dataset 290. Based on the stream-related features 260 input into the discriminator 150, the discriminator neural network 150 outputs a prediction of the QoE parameter 270.

In this way, the discriminator 150 is trained to output K+1 classes, where the first K classes are related to video QoE parameters and the additional class produces the real/fake binary output characteristic of GANs.

Essentially, the generator 220 is defined by a feature-matching loss. The discriminator 150 is defined by a supervised loss and an unsupervised loss. The supervised loss is a cross-entropy loss comparing predicted classes with the correct ones. The unsupervised loss is the adversarial loss used in GANs. Examples of suitable semi-supervised learning techniques for training the GAN 210 are described in "Improved Techniques for Training GANs", Goodfellow et al, https://arxiv.org/abs/1606.03498 and "Semi-Supervised Learning with GANs: Revisiting Manifold Regularization, Lecouat et al., https://arxiv.org/abs/1805.08957.

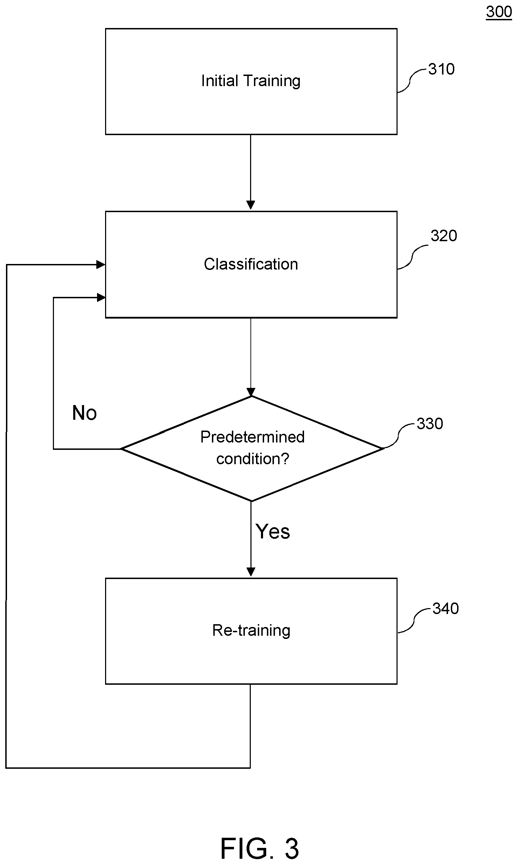

**FIG. 3** is a flow diagram illustrating the stages of operation of the discriminator neural network 150. At step 310, the discriminator neural network 150 is trained using the semi-supervised training technique discussed above in relation to **FIG. 2****.** At step 320, the trained discriminator classifies stream-related features extracted from the encrypted video stream 140 to obtain QoE parameters as discussed above in relation to **FIG. 1****.**

Over time, however, the encrypted video stream 130 may evolve and/or there may be changes to the network 140. Accordingly, the accuracy of classification of the discriminator neural network 150 will gradually decrease. To solve this problem, method 300 includes, at step 340, an automatic training phase which can be performed periodically by automatically extracting additional features from the network 140 and reusing the existing labeled dataset 250. This automatic training phase may be referred to as "re-training", whereas the training performed at step 310 may be referred to as initial training. In some embodiments, re-training may be performed on a weekly or a monthly basis and may be triggered by an external active element, which is a component of the system 100 (not illustrated), that continuously checks the validity of the output of the discriminator neural network 150.

Thus, at step 330, a determination is made as to whether a predetermined condition is met. In an embodiment, the predetermined condition may be one of a predetermined period of time having passed (i.e. re-training is automatically performed periodically), a value at least one QoE parameter has exceeded or fallen below a threshold value, or an input from an owner of the network/content or other user is received, thereby triggering re-training. If the predetermined condition is not met, the method 300 returns to step 320 and the discriminator continues classifying stream-related features. If the first predetermined condition is met, however, the discriminator neural network 150 is re-trained at step 340.

At step 340, a new set of unlabeled stream-related features are automatically obtained from the encrypted video stream 130. The discriminator neural network 150 is then retrained using semi-supervised learning, using the labeled dataset 290 and the new set of unlabeled stream-related features. By reusing the labeled dataset, the user quality of experience may be continuously monitored without having to new labels from user equipment.

In an embodiment, to cope with long-term variations in the video traffic, initial training, including generating a new labeled dataset, may be repeated periodically. The frequency of performing steps 310 and 340 varies depending on the characteristics of the QoE parameters, the type of network, the type of content etc. Performing the initial training may be triggered by a determination that another predetermined condition is met. For example, the another predetermined condition being met may include a predetermined period of time having passed, a value at least one QoE parameter has exceeded or fallen below a threshold value, or an input from an owner of the network/content or other user is received . In some embodiments, the initial training may be performed on a quarterly or bi-quarterly basis. In some embodiments, the initial training is triggered by a user, for example if the QoE parameters obtained from the discriminator neural network 150 do not match those obtained by other means (for example, via the content provider). In other embodiments, the initial training may be triggered automatically, for example when the external active element detects a significant deviation between the QoE parameters obtained from the discriminator 150 and the expected QoE parameters.

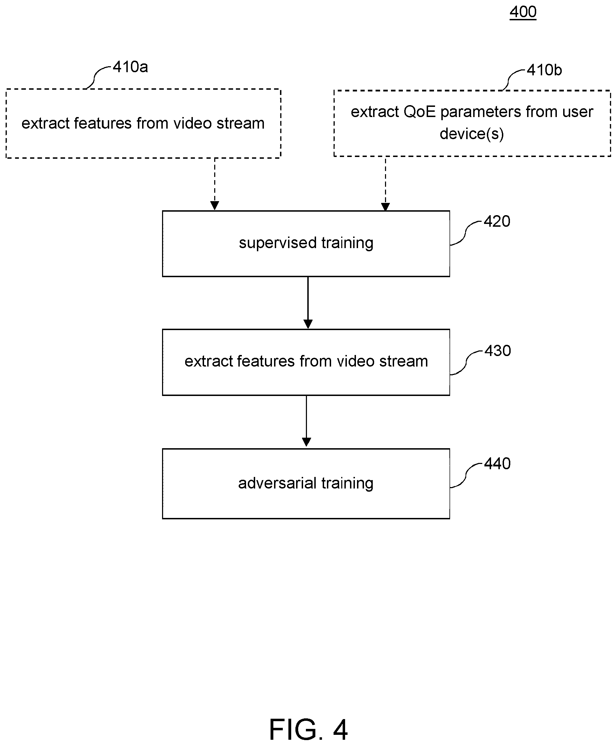

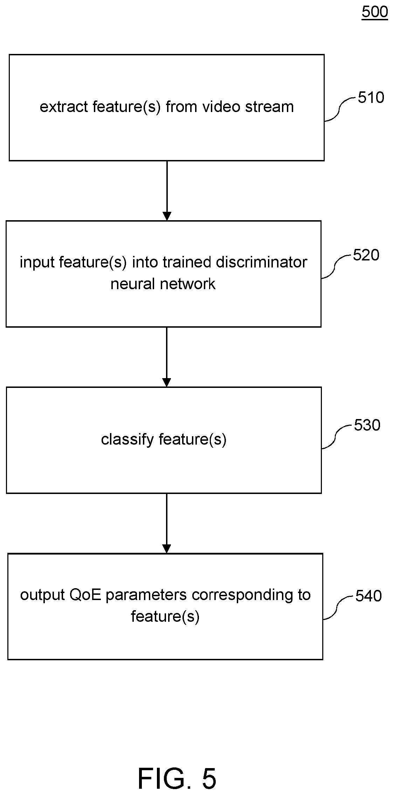

**FIGS. 4** **and** **5** are flow diagrams illustrating steps of training and classification discussed above in relation to FIGS. 1 to 3. **FIG. 4** is a flow diagram illustrating a method 400 of training the discriminator neural network 150 (steps 310 and 340 of **FIG. 3****).**

At step 410, stream-related features 260 and the corresponding QoE parameters 270 are obtained. Specifically, stream-related features 260 are extracted from the video stream 130 at step 410a and QoE parameters 270 are extracted from at least one user device 110 at step 410b. The stream-related features 260 are then labeled with the corresponding QoE parameters 270 to generate the labeled dataset 250 as discussed above. Note that step 410 is shown in **FIG. 4** with dashed lines because it is an optional step that is carried out during initial training (step 310 of **FIG. 3****)** only. During re-training (step 340 of **FIG. 3****),** the labeled dataset 250 is re-used and no new labeled data is generated.

The labeled dataset 250 is input into the discriminator neural network 150 and, at step 420, the discriminator neural network 150 is trained using a supervised learning technique based the labeled data 250. The supervised training enables the discriminator to learn how to classify stream-related features into one of a plurality of classes, where each class corresponds to a QoE parameter.

At step 430, another set of stream-related features 290 is extracted from the video stream 130 to form unlabeled dataset 280. As discussed above, the stream-related features 290 may be extracted automatically for retraining. In an embodiment, the stream-related features 290 are extracted automatically when it is determined that a predetermined condition is met. Unlabeled dataset 280 is input into the discriminator neural network. As discussed above, the discriminator 150 is a component of the GAN 210. GAN 210 comprises the discriminator 150 and a generator neural network 220. At step 440, the discriminator neural network 150 is trained using an adversarial training technique. The discriminator 150 receives unlabeled data that comprises the unlabeled dataset 280 as well as stream-related features 240 generated by the generator neural network 220. Both the discriminator 150 and the generator 220 are trained using the standard two-player adversarial game as discussed above.

**FIG. 5** is a flow diagram illustrating a method 500 of using the trained discriminator neural network 150 to classify stream-related features (steps 320 of **FIG. 3****).**

At step 510, stream-related features are extracted from one or more encrypted video streams 130 that are sent from a content server 120 to at least one user device 110. In some embodiments, the stream-related features are extracted automatically and periodically. In this way, the video quality of experience of end users can be monitored continuously. The stream-related features 170 are stored as unlabeled dataset 180.

At step 520, the stream-related features 170 (i.e. dataset 180) are input into the trained discriminator neural network 150. The discriminator 150 then classifies each of the stream-related features 170 into at least one class of a plurality of classes. Each class of the plurality of classes corresponds to a QoE parameter that represents the quality of experience of that end users have when processing that network traffic (i.e. video stream 130) in their user equipment.

While some specific embodiments have been described in detail above, it will be apparent to those skilled in the art that various modifications, variations and improvements of the embodiments may be made in the light of the above teachings and within the content of the appended claims without departing from the intended scope of the embodiments. In addition, those areas in which it is believed that those of ordinary skill in the art are familiar have not been described herein in order not to unnecessarily obscure the embodiments described herein. Accordingly, it is to be understood that the embodiments are not to be limited by the specific illustrative embodiments, but only by the scope of the appended claims.

Where the above embodiments have been described in the context of method steps, they also represent a description of a corresponding component, module or feature of a corresponding apparatus or system. Some or all of the method steps may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system.

Generally, embodiments can be implemented as a computer program product with a program code or computer-executable instructions, the program code or computer-executable instructions being operative for performing one of the methods when the computer program product runs on a computer. The program code or the computer-executable instructions may, for example, be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor. In a further embodiment, an apparatus comprises one or more processors and the storage medium mentioned above. In a further embodiment, an apparatus comprises means, for example processing circuitry like e.g. a processor communicating with a memory, the means being configured to, or adapted to, perform one of the methods described herein. A further embodiment comprises a computer having installed thereon the computer program or instructions for performing one of the methods described herein.

## Claims

1. A computer-implemented method (500) of classifying features of an encrypted video stream to determine video quality of experience, QoE, the method comprising:
extracting (510), from one or more encrypted video streams sent from a content server to at least one user device, at least one stream-related feature;
inputting (520) the at least one stream-related feature into a discriminator neural network of a generative adversarial network, GAN, wherein the discriminator neural network is trained to classify the at least one stream-related feature using semi-supervised learning based on labeled data and first unlabeled data, and wherein the discriminator neural network is periodically re-trained using the labeled data and second unlabeled data based at least in part on meeting a predetermined condition; and
classifying (530), by the discriminator neural network, the at least one stream-related feature into at least one class of a plurality of classes, wherein each of the plurality of classes corresponds to a QoE parameter.

2. The computer-implemented method of claim 1, wherein the labeled data comprises stream-related features extracted from the one or more encrypted video streams and labeled with corresponding QoE parameters extracted from the at least one user device, and
wherein the unlabeled data comprises stream-related features extracted from the one or more encrypted video streams and stream-related features generated by a generator neural network of the GAN.

3. The computer-implemented method of claim 1 or 2, wherein the semi-supervised learning comprises supervised training of the discriminator neural network based on the labeled set of data and adversarial training of the discriminator neural network based on the unlabeled data.

4. A computer-implemented method (400) for training a discriminator neural network of a generative adversarial network, GAN, to classify stream-related features of an encrypted video stream, the method comprising:
training (420) a discriminator neural network of a generative adversarial network, GAN, using a supervised learning technique based on labeled data, wherein the labeled data comprises stream-related features extracted from one or more encrypted video streams and labeled with corresponding QoE parameters extracted from the at least one user device;
training (440) the discriminator neural network using an adversarial training technique based on first unlabeled data, wherein unlabeled data comprises stream-related features extracted from the one or more encrypted video streams and stream-related features generated by a generator neural network of the GAN; and
repeating the preceding steps, using the labeled data and second unlabeled data, based at least in part on meeting a predetermined condition.

5. The method of one of the preceding claims, wherein the predetermined condition being met comprises at least one of: a predetermined period of time having passed since the discriminator neural network was trained, a value of at least one QoE parameter falls below or exceeds a threshold value, and a user input is received.

6. The method of one of the preceding claims, wherein at least one of:
the QoE parameters comprise one or more of video quality parameters, video resolution parameters, a rebuffering time, a rebuffering time percentage, a number of stalls, an average stall duration, a time to stream start, and a streaming reproduction cut-off ratio, and
the stream-related features comprise at least one of a volume timeline, a mean throughput, an effective throughput, a quartile of throughput, a video state estimate, a video duration, a total number of high, mid and/or low bitrate peaks, a high, mid and/or low peak density, and a total number of the one or more encrypted video streams.

7. A system (100) for determining quality of experience, QoE, parameters of an encrypted video stream received at a user device, the system comprising:
at least one user device (110) configured to receive, from a content server (120), over a network (140), one or more encrypted video streams (130); and
a generative adversarial network, GAN, (210) comprising a discriminator neural network (150) and a generator neural network (220),
wherein the discriminator neural network is trained to classify at least one stream-related feature (170) extracted from the one or more encrypted video streams into at least one class of a plurality of classes, using semi-supervised learning based on labeled data (250) and first unlabeled data (240, 280), wherein each of the plurality of classes corresponds to a QoE parameter (160), and wherein the discriminator neural network is configured to be periodically re-trained using the labeled data and second unlabeled data based at least in part on a predetermined condition being met.

8. The system of claim 7, further comprising a feature extraction module configured to automatically extract stream-related features from the one or more encrypted video streams whenever the predetermined condition is met.

9. The system of claim 7 or 8, wherein the labeled data comprises stream-related features (260) extracted from the one or more encrypted video streams and labeled with corresponding QoE parameters (270) extracted from the at least one user device, and
wherein the unlabeled data comprises stream-related features (290) extracted from the one or more encrypted video streams and stream-related features (240) generated by a generator neural network of the GAN.

10. The system of one of the preceding claims, wherein the semi-supervised learning comprises supervised training of the discriminator neural network based on the labeled set of data and adversarial training of the discriminator neural network based on the unlabeled data.

11. The system of one of the preceding claims, wherein the predetermined condition being met comprises at least one of: a predetermined period of time having passed since the discriminator neural network was trained, a value of at least one QoE parameter falls below or exceeds a threshold value, and a user input is received.

12. The system of one of the preceding claims, wherein the network is a fixed or a mobile network.

13. The system of one of the preceding claims, wherein the network is a converged network.

14. A computer-readable storage medium having computer-executable instructions stored thereon, which, when executed by one or more processors perform the method of one of claims 1 to 6.

## Patentansprüche

1. Computerimplementiertes Verfahren (500) zum Klassifizieren von Merkmalen eines verschlüsselten Videostroms für das Bestimmen der Erlebnisqualität (Quality of Experience bzw. QoE) eines Videos, wobei das Verfahren umfasst:
Extrahieren (510), aus einem oder mehreren verschlüsselten Videoströmen, die von einem Inhaltsserver an wenigstens ein Benutzergerät gesendet werden, wenigstens eines strombezogenen Merkmals,
Eingeben (520) des wenigstens einen strombezogenen Merkmals in ein neuronales Diskriminator-Netzwerk eines generativen gegnerischen Netzwerks (Generative Adversarial Network bzw. GAN), wobei das neuronale Diskriminator-Netzwerk trainiert ist für das Klassifizieren des wenigstens einen strombezogenen Merkmals unter Verwendung eines halb-überwachten Lernens basierend auf etikettierten Daten und ersten nicht-etikettierten Daten, und wobei das neuronale Diskriminator-Netzwerk unter Verwendung der etikettierten Daten und von zweiten nicht-etikettierten Daten basierend wenigstens teilweise auf dem Erfüllen einer vorbestimmten Bedingung periodisch neu trainiert wird, und
Klassifizieren (530), durch das neuronale Diskriminator-Netzwerk, des wenigstens einen strombezogenen Merkmals in wenigstens eine Klasse aus einer Vielzahl von Klassen, wobei jede aus der Vielzahl von Klassen einem QoE-Parameter entspricht.

2. Computerimplementiertes Verfahren nach Anspruch 1, wobei die etikettierten Daten strombezogene Merkmale, die aus dem einen oder den mehreren verschlüsselten Videoströmen extrahiert und mit entsprechenden von dem wenigstens einen Benutzergerät extrahierten QoE-Parametern etikettiert werden, umfassen, und
wobei die nicht-etikettierten Daten strombezogene Merkmale, die aus dem einen oder den mehreren verschlüsselten Videoströmen extrahiert werden, und strombezogene Merkmale, die durch ein neuronales Generator-Netzwerk des GAN erzeugt werden, umfassen.

3. Computerimplementiertes Verfahren nach Anspruch 1 oder 2, wobei das halbüberwachte Lernen ein überwachtes Trainieren des neuronalen Diskriminator-Netzwerks basierend auf dem etikettierten Satz von Daten und ein gegnerisches Lernen des neuronalen Diskriminator-Netzwerks basierend auf den nicht-etikettierten Daten umfasst.

4. Computerimplementiertes Verfahren (400) für das Trainieren eines neuronalen Diskriminator-Netzwerks eines generativen gegnerischen Netzwerks (Generative Adversarial Network bzw. GAN) für das Klassifizieren von strombezogenen Merkmalen eines verschlüsselten Videostroms, wobei das Verfahren umfasst:
Trainieren (420) eines neuronalen Diskriminator-Netzwerks eines GAN unter Verwendung einer halb-überwachten Lerntechnik basierend auf etikettierten Daten, wobei die etikettierten Daten strombezogene Merkmale, die aus einem oder mehreren verschlüsselten Videoströmen extrahiert und mit entsprechenden von dem wenigstens einen Benutzergerät extrahierten Erlebnisqualität (Quality of Experience bzw. QoE)-Parametern etikettiert werden, umfassen,
Trainieren (440) des neuronalen Diskriminator-Netzwerks unter Verwendung einer gegnerischen Trainingstechnik basierend auf ersten nicht-etikettierten Daten, wobei die nicht-etikettierten Daten strombezogene Merkmale, die aus dem einen oder den mehreren verschlüsselten Videoströmen extrahiert werden, und strombezogene Merkmale, die durch ein neuronales Generator-Netzwerk des GAN erzeugt werden, umfassen, und
Wiederholen der vorstehenden Schritte unter Verwendung der etikettierten Daten und von zweiten nicht-etikettierten Daten basierend wenigstens teilweise auf dem Erfüllen einer vorbestimmten Bedingung.

5. Verfahren nach einem der vorstehenden Ansprüche, wobei das Erfüllen der vorbestimmten Bedingung wenigstens eines der Folgenden umfasst: eine vorbestimmte Zeitperiode ist seit dem Trainieren des neuronalen Diskriminator-Netzes vergangen; ein Wert wenigstens eines QoE-Parameters fällt unter oder überschreitet einen Schwellwert; und eine Benutzereingabe wird empfangen.

6. Verfahren nach einem der vorstehenden Ansprüche, wobei wenigstens eines der Folgenden gilt:
die QoE-Parameter umfassen Videoqualität-Parameter, Videoauflösung-Parameter, eine Umpufferungszeit, einen Umpufferungszeit-Prozentsatz, eine Anzahl von Stillständen, eine durchschnittliche Stillstandszeit, eine Zeitdauer bis zum Start des Stroms und/oder ein Stromwiedergabe-Abschneidungsverhältnis, und
die strombezogenen Merkmale umfassen eine Volumen-Zeitleiste, einen gemittelten Durchsatz, einen effektiven Durchsatz, ein Quartil des Durchsatzes, eine Videozustandsschätzung, eine Videodauer, eine Gesamtanzahl von hohen, mittleren und/oder niedrigen Bitratenspitzen, eine hohe, mittlere und/oder niedrige Spitzendichte und/oder eine Gesamtanzahl des einen oder der mehreren verschlüsselten Videoströme.

7. System (100) zum Bestimmen von Erlebnisqualität (Quality of Experience bzw. QoE)-Parametern eines verschlüsselten Videostroms, der an einem Benutzergerät empfangen wird, wobei das System umfasst:
wenigstens ein Benutzergerät (110), das konfiguriert ist zum Empfangen, von einem Inhaltsserver (120) und über ein Netzwerk (140), eines oder mehrerer verschlüsselter Videoströme (130), und
ein generatives gegnerisches Netzwerk (Generative Adversarial Network bzw. GAN) (210), das ein neuronales Diskriminator-Netzwerk (150) und ein neuronales Generator-Netzwerk (220) umfasst,
wobei das neuronale Diskriminator-Netzwerk trainiert ist für das Klassifizieren wenigstens eines strombezogenen Merkmals (170), das aus dem einen oder den mehreren verschlüsselten Videoströmen extrahiert wird, in wenigstens eine Klasse aus einer Vielzahl von Klassen unter Verwendung eines halb-überwachten Lernens basierend auf etikettierten Daten (250) und ersten nicht-etikettierten Daten (240, 280), wobei jede aus der Vielzahl von Klassen einem QoE-Parameter (160) entspricht und wobei das neuronale Diskriminator-Netzwerk konfiguriert ist, um unter Verwendung der etikettierten Daten und von zweiten nicht-etikettierten Daten basierend wenigstens teilweise auf dem Erfüllen einer vorbestimmten Bedingung periodisch neu trainiert zu werden.

8. System nach Anspruch 7, das weiterhin ein Merkmal-Extraktionsmodul umfasst, das konfiguriert ist zum automatischen Extrahieren von strombezogenen Merkmalen aus dem einen oder den mehreren verschlüsselten Videoströmen, immer wenn die vorbestimmte Bedingung erfüllt wird.

9. System nach Anspruch 7 oder 8, wobei die etikettierten Daten strombezogene Merkmale (260), die aus dem einen oder den mehreren verschlüsselten Videoströmen extrahiert und mit entsprechenden von dem wenigstens einen Benutzergerät extrahierten QoE-Parametern (270) etikettiert werden, umfassen, und
wobei die nicht-etikettierten Daten strombezogene Merkmale (290), die aus dem einen oder den mehreren verschlüsselten Videoströmen extrahiert werden, und strombezogene Merkmale (240), die durch ein neuronales Generator-Netzwerk des GAN erzeugt werden, umfassen.

10. System nach einem der vorstehenden Ansprüche, wobei das halbüberwachte Lernen ein überwachtes Trainieren des neuronalen Diskriminator-Netzwerks basierend auf dem etikettierten Satz von Daten und ein gegnerisches Trainieren des neuronalen Diskriminator-Netzwerks basierend auf den nicht-etikettierten Daten umfasst.

11. System nach einem der vorstehenden Ansprüche, wobei das Erfüllen der vorbestimmten Bedingung wenigstens eines der Folgenden umfasst: eine vorbestimmte Zeitperiode ist seit dem Trainieren des neuronalen Diskriminator-Netzes vergangen; ein Wert wenigstens eines QoE-Parameters fällt unter oder überschreitet einen Schwellwert; und eine Benutzereingabe wird empfangen.

12. System nach einem der vorstehenden Ansprüche, wobei das Netzwerk ein fixes oder ein mobiles Netzwerk ist.

13. System nach einem der vorstehenden Ansprüche, wobei das Netzwerk ein konvergentes Netzwerk ist.

14. Computerlesbares Speichermedium mit darauf gespeicherten computerausführbaren Befehlen, die bei einer Ausführung durch einen oder mehrere Prozessoren das Verfahren gemäß einem der Ansprüche 1 bis 6 durchführen.

## Revendications

1. Procédé (500) mis en œuvre par ordinateur pour classer les caractéristiques d'un flux vidéo chiffré pour déterminer la qualité d'expérience vidéo (QoE), le procédé comprenant :
extraire (510), à partir d'un ou plusieurs flux vidéo chiffrés envoyés par un serveur de contenu à au moins un dispositif utilisateur, au moins une caractéristique liée au flux ;
entrer (520) l'au moins une caractéristique liée au flux dans un réseau neuronal discriminateur d'un réseau contradictoire génératif (GAN), dans lequel le réseau neuronal discriminateur est entraîné pour classer au moins une caractéristique liée au flux en utilisant un apprentissage semi-supervisé sur la base des données étiquetées et des premières données non étiquetées, et dans lequel le réseau neuronal discriminateur est périodiquement réentraîné en utilisant les données étiquetées et des deuxièmes données non étiquetées en fonction, au moins en partie, de la satisfaction d'une condition prédéterminée ; et
classer (530), par le réseau neuronal discriminateur, l'au moins une caractéristique liée au flux dans au moins une classe d'une pluralité de classes, dans lequel chacune de la pluralité de classes correspond à un paramètre de qualité d'expérience.

2. Procédé mis en œuvre par ordinateur selon la revendication 1, dans lequel les données étiquetées comprennent des caractéristiques liées au flux extraites d'un ou de plusieurs flux vidéo chiffrés et étiquetées avec des paramètres de qualité d'expérience correspondants extraits de l'au moins un dispositif utilisateur, et
dans lequel les données non étiquetées comprennent des caractéristiques liées au flux extraites des un ou plusieurs flux vidéo chiffrés et des caractéristiques liées au flux générées par un réseau neuronal générateur du GAN.

3. Procédé mis en œuvre par ordinateur selon la revendication 1 ou 2, dans lequel l'apprentissage semi-supervisé comprend l'entraînement supervisé du réseau neuronal discriminateur sur la base de l'ensemble de données étiquetées et l'entraînement contradictoire du réseau neuronal discriminateur sur la base des données non étiquetées.

4. Procédé (400) mis en œuvre par ordinateur pour former un réseau neuronal discriminateur d'un réseau contradictoire génératif (GAN) pour classer les caractéristiques liées au flux d'un flux vidéo chiffré, le procédé comprenant :
former (420) un réseau neuronal discriminateur d'un réseau contradictoire génératif (GAN) en utilisant une technique d'apprentissage supervisé basée sur des données étiquetées, dans lequel les données étiquetées comprennent des caractéristiques liées au flux extraites d'un ou de plusieurs flux vidéo chiffrés et étiquetées avec des paramètres de qualité d'expérience correspondants extraits de l'au moins un dispositif utilisateur ;
entraîner (440) le réseau neuronal discriminateur en utilisant une technique d'entraînement contradictoire basée sur les premières données non étiquetées, dans lequel les données non étiquetées comprennent des caractéristiques liées au flux extraites des un ou plusieurs flux vidéo chiffrés et des caractéristiques liées au flux générées par un réseau neuronal générateur du GAN ; et
répéter les étapes précédentes, en utilisant les données étiquetées et les deuxièmes données non étiquetées, basées au moins en partie sur le respect d'une condition prédéterminée.

5. Procédé selon l'une quelconque des revendications précédentes, dans lequel la condition prédéterminée est remplie dans au moins un des cas suivants : une période de temps prédéterminée s'est écoulée depuis l'entraînement du réseau neuronal discriminateur, une valeur d'au moins un paramètre de qualité d'expérience est inférieure ou supérieure à une valeur seuil, et une entrée d'utilisateur est reçue.

6. Procédé selon l'une quelconque des revendications précédentes, dans lequel au moins l'un des éléments suivants est présent :
les paramètres de qualité d'expérience comprennent un ou plusieurs paramètres de qualité vidéo, des paramètres de résolution vidéo, un temps de remise à niveau, un pourcentage de temps de remise à niveau, un nombre de décrochages, une durée moyenne de décrochage, un temps de démarrage du flux et un taux de coupure de la reproduction du flux, et
les caractéristiques liées au flux comprennent au moins l'un des éléments suivants : une chronologie du volume, un débit moyen, un débit effectif, un quartile de débit, une estimation de l'état de la vidéo, une durée de la vidéo, un nombre total de pics de débit élevés, moyens et/ou faibles, une densité de pics élevés, moyens et/ou faibles, et un nombre total des un ou plusieurs flux vidéo chiffrés.

7. Système (100) permettant de déterminer les paramètres de qualité d'expérience (QoE) d'un flux vidéo chiffré reçu par un dispositif utilisateur, le système comprenant :
au moins un dispositif utilisateur (110) configuré pour recevoir, d'un serveur de contenu (120), sur un réseau (140), un ou plusieurs flux vidéo chiffrés (130) ; et
un réseau contradictoire génératif (GAN) (210) comprenant un réseau neuronal discriminateur (150) et un réseau neuronal générateur (220),
dans lequel le réseau neuronal discriminateur est entraîné pour classer au moins une caractéristique liée au flux (170) extraite des un ou plusieurs flux vidéo chiffrés dans au moins une classe d'une pluralité de classes, en utilisant un apprentissage semi-supervisé sur la base des données étiquetées (250) et des premières données non étiquetées (240, 280), dans lequel chacune de la pluralité de classes correspond à un paramètre de qualité d'expérience (160), et dans lequel le réseau neuronal discriminateur est configuré pour être périodiquement réentraîné en utilisant les données étiquetées et des deuxièmes données non étiquetées, au moins en partie si une condition prédéterminée est remplie.

8. Système selon la revendication 7, comprenant en outre un module d'extraction de caractéristiques configuré pour extraire automatiquement des caractéristiques liées au flux à partir des un ou plusieurs flux vidéo chiffrés chaque fois que la condition prédéterminée est remplie.

9. Système selon la revendication 7 ou 8, dans lequel les données étiquetées comprennent des caractéristiques liées au flux (260) extraites des un ou plusieurs flux vidéo chiffrés et étiquetées avec des paramètres correspondants de qualité d'expérience (270) extraits de l'au moins un dispositif utilisateur, et
dans lequel les données non étiquetées comprennent des caractéristiques liées au flux (290) extraites des un ou plusieurs flux vidéo chiffrés et des caractéristiques liées au flux (240) générées par un réseau neuronal générateur du GAN.

10. Système selon l'une quelconque des revendications précédentes, dans lequel l'apprentissage semi-supervisé comprend l'entraînement supervisé du réseau neuronal discriminateur sur la base de l'ensemble de données étiquetées et l'entraînement contradictoire du réseau neuronal discriminateur sur la base des données non étiquetées.

11. Système selon l'une quelconque des revendications précédentes, dans lequel la condition prédéterminée est remplie dans au moins un des cas suivants : une période de temps prédéterminée s'est écoulée depuis l'entraînement du réseau neuronal discriminateur, une valeur d'au moins un paramètre de qualité d'expérience est inférieure ou supérieure à une valeur seuil, et une entrée d'utilisateur est reçue.

12. Système selon l'une quelconque des revendications précédentes, dans lequel le réseau est un réseau fixe ou mobile.

13. Système selon l'une quelconque des revendications précédentes, dans lequel le réseau est un réseau convergent.

14. Support de stockage lisible par ordinateur sur lequel sont stockées des instructions exécutables par ordinateur qui, lorsqu'elles sont exécutées par un ou plusieurs processeurs, réalisent le procédé décrit selon l'une des revendications 1 à 6.
